(19) Europäisches Patentamt
European Patent Office
Office européen des brevets

(11) **EP 2 572 249 B1**

(12) **EUROPÄISCHE PATENTSCHRIFT**

(45) Veröffentlichungstag und Bekanntmachung des Hinweises auf die Patenterteilung:
**19.03.2014   Patentblatt 2014/12**

(21) Anmeldenummer: 10726432.7

(22) Anmeldetag: **10.06.2010**

(51) Int Cl.:
***G05B 19/05*** *(2006.01)*

(86) Internationale Anmeldenummer:
**PCT/EP2010/003482**

(87) Internationale Veröffentlichungsnummer:
**WO 2011/154020 (15.12.2011 Gazette 2011/50)**

(54) **RECHENVORRICHTUNG MIT KOORDINATION DES ZUGRIFFS AUF EINEN INTERNEN SPEICHER UND BETRIEBSVERFAHREN**

COMPUTATION DEVICE WITH COORDINATION OF THE ACCESS TO AN INTERNAL MEMORY AND OPERATION METHOD

DISPOSITIF DE CALCUL AVEC COORDINATION DE L'ACCES A DES EMPLACEMENTS MEMOIRE INTERNE ET  METHODE D'OPERATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.06.2010   PCT/EP2010/003468**

(43) Veröffentlichungstag der Anmeldung:
**27.03.2013   Patentblatt 2013/13**

(73) Patentinhaber: **Siemens Aktiengesellschaft 80333 München (DE)**

(72) Erfinder:
• **ENGEL, Michael**
  **15848 Beeskow (DE)**
• **HEUSER, Frederik**
  **90403 Nürnberg (DE)**
• **SCHLERETH, Michael**
  **91452 Wilhermsdorf (DE)**
• **WINTER, Robert**
  **92355 Velburg (DE)**

(56) Entgegenhaltungen:
**EP-A2- 0 363 905          US-A1- 2004 098 141
US-A1- 2005 246 453**

**Beschreibung**

Die vorliegende Erfindung betrifft eine Rechenvorrichtung, in der eine speicherprogrammierbare Steuerung implementiert ist, und in der ein gegenüber der speicherprogrammierbaren Steuerung im Hinblick auf einen Speicherzugriff nachrangiges System implementiert ist, wobei in die speicherprogrammierbare Steuerung ein Speicher integriert ist, auf den eine Komponente der speicherprogrammierbaren Steuerung Zugriff hat. Darüber hinaus betrifft die vorliegende Erfindung ein Verfahren zum Betreiben einer derartigen Rechenvorrichtung.

Vor über 10 Jahren hat die Virtualisierung von System in der Informationstechnologie Einzug gehalten. Mit ihrer zunehmenden Verbreitung ist die Virtualisierung im Allgemeinen und die Echtzeitvirtualisierung im speziellen auch in der Automatisierung zu finden. Allerdings ergeben sich aus dem Zusammenspiel von Echtzeitsystemen und Virtualisierungslösungen verschiedene Probleme. Zum einen unterscheidet sich die Erwartungshaltung bezüglich der Zeit. Wo ein Echtzeitsystem eine sehr präzise Ausführung erwartet, ist bei einem virtualisierten System durchaus der Verzicht auf mehrere Sekunden Rechenzeit möglich. Dies bedingt eine asynchrone Ausführung beider Systeme. Zum anderen treten Probleme zutage, sobald gemeinsame Daten sowohl durch das Echtzeitsystem als auch die virtuellen Maschinen zu nutzen sind, was besonders dann gegeben ist, wenn in der virtuellen Maschine (VM) eine Schnittstelle für das Bedienen und Beobachten (BuB) des Echtzeitsystems beschrieben wird. Allerdings ist die Kombination einer Echtzeitsteuerung und eines virtuellen Systems mit BuB-Komponenten wünschenswert, da so beide Systeme voneinander getrennt betrieben werden können. Beispielsweise hat so eine Änderung des Echtzeitsystems nur insofern eine Auswirkung auf das BuB, als dass ein geeigneter Hypervisor (Abstraktionsschicht) umzusetzen ist. Durch die Abstraktion ist es möglich, kundenspezifische BuB-Komponenten (z. B. Bedienkonsole, Touchscreen) unverändert weiter verwenden zu können. Andererseits wirken sich Programmfehler im BuB-System, die zur Beeinträchtigung des zugrundeliegenden Betriebssystems führen, nicht auf das Echtzeitsystem aus, wodurch zusätzliche Stabilität gewonnen ist. Schließlich bleiben die zeitlichen Aspekte jedoch als offenes Problem, die eine Kommunikation der Systeme erschweren.

Ähnliche Probleme bestehen bei der Kopplung von BuB-Systemen und Steuerungen, wobei hier der Vorteil besteht, dass diese Systeme meist auf getrennten Rechnern betrieben werden. Daher wäre am ehesten ein System bestehend aus Steuerung und BuB auf einem System mit der oben genannten Anordnung vergleichbar. Dennoch besteht bei der Kombination von Steuerung und BuB der Vorteil, dass hier keine verschiedenen Zeitbasen Verwendung finden und auf dem gleichen Betriebssystem aufgesetzt wird. Daher lag das oben geschilderte Problem bislang nicht vor. Dies begründet sich in der erst beginnenden Verbreitung der Virtualisierung in der Automatisierungswelt, mit der vor allem bisher ungenutzte Prozessorzeiten vermieden werden. Allerdings sind gemeinsame und eventuell konkurrierende Datenzugriffe im Zusammenhang mit Echtzeitsystemen ein bekanntes Problem. Dies ist zu beheben durch die Verwendung von Synchronisationsmechanismen (Semaphoren, Mutex) oder aber der Zuweisung exklusiver Zugriffszeiten bei taktsynchronen Systemen. Diese Verfahren sind grundsätzlich auch weiterhin verwendbar, werfen jedoch bisher ungeklärte Probleme auf, wenn eine SPS (speicherprogrammierbare Steuerung) mit einer virtuellen Maschine zusammenarbeitet, diese Probleme begründen sich darauf, dass die SPS nicht mit konstanten Zykluszeiten arbeitet und sich so die Speicherzugriffe der SPS einer Vorhersage entziehen. Synchronisationsmechanismen hingegen führen unter ungünstigen Voraussetzungen zu nicht auflösbaren konkurrierenden Zugriffen und damit zu Verletzungen harter Echtzeitanforderungen. Weiterhin erschwert die Verwendung von unabhängigen Betriebssystemen die Verwendung von Synchronisationsmechanismen. Daher erfordert ein solcher Ansatz ein alternatives Verfahren.

Darüber hinaus sind virtuelle Maschinen nicht permanent verfügbar, da auf einem Prozessor auch andere Prozesse ausgeführt werden. Dies bedeutet im Detail, dass in unregelmäßigen Abständen die virtuelle Maschine gestoppt wird, um privilegierte Befehle auszuführen oder aber um die damit frei werdende Rechnerzeit für anderweitige Aufgaben (z. B. Host-Anwendungen) zu nutzen. Dies stellt im allgemeinen IT-Umfeld (Informationstechnologie) kein Problem dar, da hier keine definierten Antwortzeiten zu erwarten sind.

Die EP 0 363 905 A2 beschreibt ein Ein-/Ausgabegerät für eine speicherprogrammierbare Steuerung. Dabei kann mit einer Benutzer-Schaltung auf die CPU der speicherprogrammierbaren Steuerung zugegriffen werden. Mit einer Entscheidungseinrichtung wird ein Zugriff mit der Benutzer-Schaltung auf die CPU nicht ermöglicht, wenn die CPU ein Lese- oder Schreibsignal ausgibt.

Die US 2005/0246453 A1 betrifft den direkten Zugriff auf Rechenvorrichtungen, die mit nachrangigen Recheneinrichtungen gekoppelt sind, in der Umgebung einer virtuellen Maschine. Dabei kann ein virtueller Prozess mit einer Proxyeinrichtung gesteuert werden.

Des Weiteren beschreibt die US 2004/0098141 A1 eine Softwareentwicklungsplattform, mit der eine universelle Schnittstelle zu einer Mehrzahl von speicherprogrammierbaren Steuerungen ermöglicht wird. Diese Schnittstelle kann beispielsweise durch eine virtuelle Maschine realisiert sein.

Die Aufgabe der vorliegenden Erfindung besteht somit darin, für eine SPS mit wechselnden Speicherzugriffszeiten und einem nachrangigen System, z. B. einem diskontinuierlich ausgeführtem virtualisierten System, eine zuverlässigere gemeinsame Speichernutzung zu ermöglichen.

Erfindungsgemäß wird diese Aufgabe gelöst durch eine Rechenvorrichtung in der eine speicherprogrammierbare Steuerung implementiert ist, und in der ein gegenüber der speicherprogrammierbaren Steuerung im Hinblick auf einen Speicherzugriff nachrangiges System implementiert ist, wobei in die speicherprogrammierbare Steuerung ein Speicher integriert ist, auf den eine Komponente der speicherprogrammierbaren Steuerung Zugriff hat, und wobei in der Rechenvorrichtung eine Proxyeinrichtung implementiert ist, die einen Zugriff des nachrangigen Systems auf den Speicher der speicherprogrammierbaren Steuerung derart koordiniert, dass ein gleichzeitiger Zugriff der Komponente der speicherprogrammierbaren Steuerung Vorrang hat vor dem Zugriff des nachrangigen Systems.

Erfindungsgemäß gewährleistet die Proxyeinrichtung, dass die speicherprogrammierbare Steuerung innerhalb eines vorgegebenen Zeitraums Δ sicher einen Zugriff auf den Speicher erhält. Dabei wird unter einem Zugriff ein kompletter Zyklus von der Anfrage bis zur vollständigen Beantwortung verstanden. Durch diese sichere Zugriffsgarantie kann der Echtzeitbetrieb der SPS aufrechterhalten werden.

Darüber hinaus wird erfindungsgemäß bereitgestellt ein Verfahren zum Betreiben einer obigen Rechenvorrichtung, wobei ein Zugriff des nachrangigen Systems auf den Speicher der speicherprogrammierbaren Steuerung derart koordiniert wird, dass ein gleichzeitiger Zugriff der Komponente der speicherprogrammierbaren Steuerung Vorrang hat vor dem Zugriff des nachrangigen Systems, wobei die speicherprogrammierbare Steuerung innerhalb eines vorgegebenen Zeitraums sicher einen Zugriff auf den Speicher erhält.

In vorteilhafter Weise ist es so möglich, den Echtzeitanforderungen einer SPS nachzukommen und gleichzeitig einen Zugriff auf den Speicher der SPS für ein nachrangiges System zu gewährleisten, welches derartigen Echtzeitanforderungen nicht unterworfen ist.

Vorzugsweise beinhaltet das nachrangige System eine virtuelle Maschine. Damit kann beispielsweise ein diskontinuierlich ausgeführtes virtualisiertes System hinsichtlich der gemeinsamen Nutzung eines Speichers mit einer SPS mit wechselnden Speicherzugriffszeiten interagieren.

Speziell kann die virtuelle Maschine eine Bedien- und Beobachtungseinheit (HMI-Schnittstelle) aufweisen. Mithilfe der virtuellen Maschine lässt sich die BuB von der SPS getrennt betreiben, sodass eine Änderung der SPS bzw. des Echtzeitsystems auf die BuB keine Auswirkungen hat.

Die Proxyeinrichtung kann auch Teil der speicherprogrammierbaren Steuerung sein. Damit können unter Umständen die Speicherzugriffe des nachrangigen Systems vereinfacht werden.

Insbesondere kann die Proxyeinrichtung gewährleisten, dass ein Zugriff des nachrangigen Systems auf den Speicher vollständig beendet wird, wenn eine Zugriffsanfrage der speicherprogrammierbaren Steuerung vorliegt und ein vollständiger Zugriff der speicherprogrammierbaren Steuerung noch innerhalb des vorgegebenen Zeitraums Δ ab der Zugriffsanfrage sichergestellt ist. Damit muss der SPS nicht absolute Priorität beim Speicherzugriff eingeräumt werden und die Echtzeitbedingung wird dennoch erfüllt. Dadurch lässt sich in der Regel Prozessorzeit einsparen.

Des Weiteren ist es vorteilhaft, wenn die Proxyeinrichtung gewährleistet, dass ein Zugriff des nachrangigen Systems rückgängig gemacht wird, wenn seine vollständige Beendigung dazu führen würde, dass bei Vorliegen einer Zugriffsanfrage durch die speicherprogrammierbaren Steuerung der Zugriff der speicherprogrammierbaren Steuerung nicht in dem vorgegebenen Zeitraum Δ durchgeführt werden kann. Durch diese Prozedur (Roll-Back) kann gewährleistet werden, dass die Echtzeitbedingung auch dann eingehalten wird, wenn vor der Zugriffsanfrage durch die SPS bereits ein längerer Zugriff durch das nachrangige System gestartet wurde.

Die vorliegende Erfindung wird nun anhand der beigefügten Zeichnungen näher erläutert, in denen zeigen:

FIG 1      eine schematische Skizze einer erfindungsgemäßen Rechenvorrichtung;

FIG 2      ein Zeitdiagramm jeweils für eine Zugriffsanfragesituation und eine erfindungsgemäße Zugriffsdurchführung bei zeitlich aufeinanderfolgenden Anfragen;

FIG 3      ein Zeitdiagramm jeweils für eine Speicheranfragesituation und eine erfindungsgemäße Speicherzugriffssituation mit Roll-Back-Notwendigkeit; und

FIG 4      ein Zeitablaufdiagramm jeweils einer Zugriffsanfragesituation und einer erfindungsgemäßen Zugriffsausführung bei vorzeitiger Beendigung des Zugriffs durch das nachrangige System.

Die nachfolgend näher geschilderten Ausführungsbeispiele stellen bevorzugte Ausführungsformen der vorliegenden Erfindung dar.

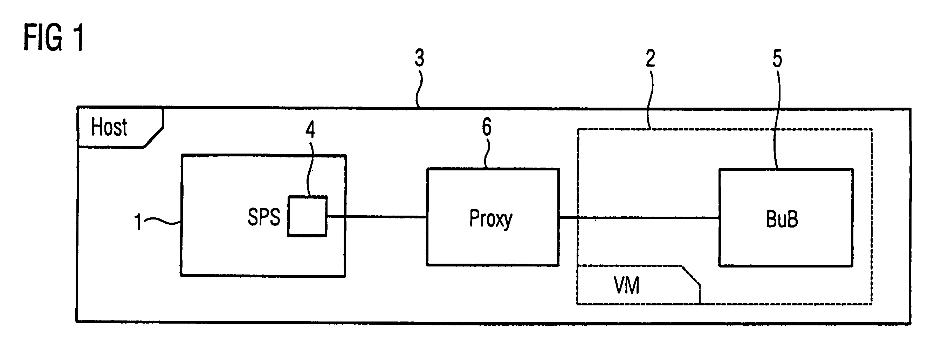

In dem Beispiel von FIG 1 wird eine SPS 1 (speicherprogrammierbare Steuerung) und eine VM 2 (virtuelle Maschine) kombiniert. Die SPS 1 ist bezüglich eines Speicherzugriffs ein vorrangiges System, während die VM 2 ein nachrangiges System ist. Außerdem besitzt die SPS 1 wechselnde Speicherzugriffszeiten und die VM 2 ist ein diskontinuierlich ausgeführtes System. Beide, sowohl die SPS 1 als auch die VM 2, sind hier auf einem gemeinsamen Host 3 implementiert. Der Speicher 4, auf dem die SPS 1 und die VM 2 zugreifen wollen, ist hier in die SPS 1 integriert. Bei dem Speicherzugriff ist man bemüht, eventuelle Freizeiten (idle) zu vermeiden, um somit eine optimale Auslastung des Gesamtsystems zu ermöglichen.

Auf der virtuellen Maschine ist beispielsweise eine BuB 5 implementiert. Bei der BuB 5 und der SPS 1 handelt es sich um vollkommen getrennte Systeme. Die BuB 5 stammt beispielsweise von einem anderen Hersteller als die SPS 1. Auch die Betriebssysteme von SPS 1 und BuB 5 können unterschiedlich sein. Die notwendige Abstraktionsebene schafft die virtuelle Maschine VM 2.

Auf dem Host 3 können auch mehrere nachrangige Systeme (insbesondere virtuelle Maschinen) implementiert sein. Auch dann bleibt das Ziel, dass alle Systeme auf den Speicher 4 der SPS 1 zugreifen sollen.

Ein wesentlicher Aspekt bei dem Zugriff auf den Speicher 4 ist, dass die SPS 1 letztenendes vorrangig ist, und ein Speicherzugriff durch eine Komponente der SPS auf den Speicher 4 nicht durch einen Speicherzugriff der VM 2 oder eines anderen nachrangigen Systems gestört wird. Beispielsweise besitzt ein System einen Notaus-Schalter, dessen Signal die SPS 1 ohne Zeitverzögerung verarbeiten muss. Der Notaus-Status wird in dem Speicher 4 abgespeichert. Es ist wichtig, dass dieser Notaus-Status auch in der BuB 5 angezeigt wird, aber es genügt dort beispielsweise eine Aktualisierung der Anzeige alle 10 Sekunden. Die VM 2 muss daher für die BuB 5 so auf den Speicher 4 zugreifen, dass die SPS 1 nicht gestört ist. Hierfür wird ein so genannter Proxy 6 (in der vorliegenden Anmeldung auch Proxyeinrichtung genannt) zwischen den Speicher 4 und die virtuelle Maschine 2 geschaltet. Der Proxy 6 besitzt in erster Linie die Aufgabe, Zugriffe auf den Speicher 4 zu koordinieren. Hierzu speichert er eventuell Daten zwischen. Außerdem kann er auch eine Filterfunktion beinhalten. Es wird also auf dem Host 3 ein Proxy 6 für Datenzugriffe der virtuellen Maschine VM 2 realisiert. Hierbei besteht die Option, den Proxy 6 alleinstehend zu verwenden wie im Beispiel von FIG 1. In einer alternativen Ausführungsform ist der Proxy 6 als Teil der SPS 1 realisiert. Eine Realisierung des Proxy 6 in der VM 2 ist hingegen nicht möglich, da die VM 2 nicht ständig läuft und daher eine lückenlose Koordination des Speicherzugriffs nicht möglich wäre.

Die Aufgabe des Proxy 6 besteht darin, Zugriffsanforderungen der VM 2 bzw. der mehreren virtuellen Maschinen entgegenzunehmen und nach Abschluss der Anforderungsübermittlung durch den Proxy 6 auszuführen, sofern kein Zugriff durch die SPS 1 aktuell ansteht. Dabei erfolgt die Ausführung auch dann, wenn die VM 2 zu diesem Zeitpunkt nicht verfügbar ist.

Die Übermittlung der Daten zwischen Proxy 6 und VM 2 bedarf hier keiner separaten Netz- oder Kommunikationsanbindung, da durch die Eigenheiten einer VM beide Systeme den gleichen physischen Speicher verwenden. Daher ist der direkte Zugriff der auf dem Host 3 laufenden Proxy-Anwendung auf diesen Speicher 4 möglich, was durch eine entsprechende Konsistenzsicherung (kein gleichzeitiger Speicherzugriff) kontrolliert wird. Der Vorteil hierbei liegt zum einen in den kürzeren Zugriffszeiten auf die Daten, da der Proxy 6 auf der Host-Ebene und nicht auf der VM-Ebene läuft. Darüber hinaus besteht der Vorteil des erfindungsgemäßen Systems in der Möglichkeit, auf den Speicher 4 zuzugreifen, auch wenn die VM 2 gerade über keine Prozessorzeit verfügt. Ist die Anfrage ausgeführt und die VM 2 wieder verfügbar, wird die entsprechende Antwort der VM 2 zugestellt.

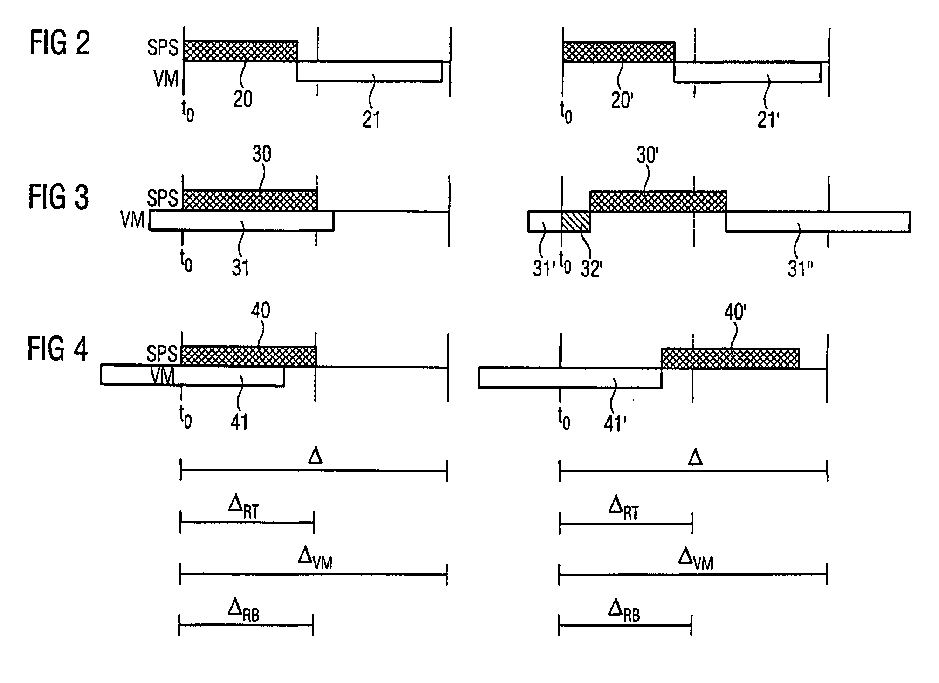

In diesem Ausführungsbeispiel ist zwar die Entkopplung der Verfügbarkeit der virtuellen Maschine VM 2 vom eigentlichen Datenzugriff gewährleistet, jedoch sind konkurrierende Datenzugriffe durch SPS 1 und Proxy 6 möglich. Die konkurrierenden Datenzugriffe werden daher durch eine dynamische Zugriffszeitenregelung kontrolliert, die der SPS 1 ein definiertes Antwortverhalten zusichert, das für Echtzeitsysteme notwendig ist. Hierfür wird ein Zeitfenster $\Delta$ definiert, in dem ein Zugriff für die SPS 1 durch dieses Verfahren sichergestellt ist. In den FIG 2 bis 4 ist dieses Zeitfenster $\Delta$ eingezeichnet. Die Messung der Zeit dieses Zeitfensters $\Delta$ erfolgt mit der ersten Anfrage eines Zugriffs auf den kritischen Speicherbereich durch die SPS 1. Alternativ ließe sich dieses Zeitfenster auch mit der Zykluszeit der Steuerung koppeln, vor allem bei taktsynchronen Systemen, bei denen sämtliche Aktionen durch einen festen Takt gesteuert werden.

Die maximal notwendige Zugriffszeit der SPS 1 ist hier mit $\Delta_{RT}$ definiert. Die in Abhängigkeit von einem "Roll-back"-Verfahren, bei dem ein begonnener Speicherzugriff rückabgewickelt wird, zu definierende maximale Zugriffszeit der virtuellen Maschine(n), die sich im Zugriff des Proxy 6 manifestiert, wird mit $\Delta_{VM}$ definiert. Im vorliegenden Beispiel ist die maximale Zugriffszeit $\Delta_{VM}$ der virtuellen Maschinen gleich der Zeit $\Delta$, in der ein Zugriff für die SPS sicher gewährleistet sein muss. Der aktuelle Zeitpunkt bezogen auf den Start der Zeitmessung von $\Delta_{VM}$ wird nachfolgend mit $\Delta_t$ bezeichnet und durch einen Hardware-Timer gemessen. Um die Verzögerungen beim Zugriff durch die virtuelle Maschine gering zu halten, wird zum einen jeweils nur ein Zugriff der virtuellen Maschine zu einem Zeitpunkt gestattet und zum zweiten ein "Roll-Back"-Verfahren berücksichtigt. Das "Roll-Back"-Verfahren dient dazu, den Zugriff der SPS 1 innerhalb der gewährleisteten Zeit zu ermöglichen und daher im Bedarfsfall einen bereits begonnen Zugriff der VM 2, welcher über den Proxy 6 erfolgt, auf den gemeinsam genutzten Speicherbereich 4 rückgängig zu machen und damit den konsistenten Zustand zu erhalten. Die für das "Roll-Back" maximal nötige Zeit wird mit $\Delta_{RB}$ angegeben. Hierbei wird die Geschwindigkeit des gewählten Verfahrens durch 1/x ausgedrückt. Insgesamt ergibt sich hieraus das folgende Zeitverhalten:

$$(1) \quad \Delta = \begin{vmatrix} \Delta_{RB} + \Delta_{RT}; \textit{für } \Delta_t < \Delta_{RB} \\ \Delta_{VM} - \Delta_t + \Delta_{RT}; \textit{für } \Delta_t \geq \Delta_{RB} \end{vmatrix}$$

$$(2) \quad \Delta_{RB} \leq \frac{1}{x} \Delta_{VM}$$

Dies bedeutet, dass unter der Voraussetzung der Zugriffsfreiheit bezüglich der SPS 1 ein Zugriff im Namen der VM 2 durch den Proxy 6 initiiert wird. Ein Zugriff der VM 2 auf den Speicher 4 ist durch den Proxy 6 über die Virtualisierungsschicht (auch Virtual Machine Manager oder Hypervisor genannt) zu erkennen, da diese für die Ausführung einer jeden Anweisung in der VM 2 verantwortlich ist, und so die Überwachung vereinfacht. Für den Zugriff der SPS 1 ist jedoch eine andere Lösung notwendig. Hier bleibt nur die Verwendung der Betriebssystemmittel (z. B. einer Exception) oder die Bereitstellung einer geeigneten Schnittstelle in der SPS 1. Der Zugriff des Proxy 6 wird vollständig ausgeführt, sofern kein Zugriff durch die SPS 1 zu verzeichnen ist oder aber die Abarbeitung des VM-Zugriffs soweit abgeschlossen ist, dass die Beendigung des VM-Zugriffs und die Ausführung des SPS-Zugriffs innerhalb der zur Verfügung stehenden Gesamtzeit $\Delta$ möglich ist (vergleiche FIG 4). Ist dies nicht der Fall, wird ein "Roll-Back" des VM-Zugriffs veranlasst und anschließend der SPS-Zugriff ausgeführt (vergleiche FIG 3). In jedem Fall ist so die Einhaltung der Gesamtzeit $\Delta$ sichergestellt.

Das geschilderte Zeitverhalten ergibt den Vorteil, dass die zeitliche Varianz bzw. Dauer zwischen der minimalen und maximalen Zugriffszeit der SPS 1 maximal $1/x$ $\Delta_{VM}$ beträgt, wobei sich x aus dem "Roll-Back"-Verfahren ergibt. Bei Verwendung eines einfachen Wiederherstellungsalgorithmus für das Zurückschreiben im "Roll-Back" ist x=1, wohingegen mit speziellen Transaktionsverfahren (z. B. mit cache) kürzere "Roll-Back"-Zeiten realisierbar sind. Entsprechend wird die Reaktionszeit der SPS 1 proportional mit der Zugriffszeit der virtuellen Maschine verlängert. Hieraus wiederum ergibt sich, dass die Erhöhung der Reaktionszeit von der Art des verwendeten Speichers und der Gestaltung der Speicherzugriffe durch die virtuelle Maschine abhängt.

Nachfolgend werden anhand der FIG 2 bis 4 unterschiedliche Fälle des Speicherzugriffs durch die SPS und die VM auf einen gemeinsamen Speicher detaillierter dargestellt. Die dargestellten Fälle unterscheiden sich in den Zugriffszeitpunkten der SPS bzw. VM. In dem Beispiel wird nur eine VM verwendet, und für das "Roll-Back"-Verfahren wird ein einfacher Wiederherstellungsalgorithmus verwendet, sodass gilt: x=1. Die an sich trivialen Fälle, dass nur ein Zugriff der SPS oder nur ein Zugriff der VM vorliegt, sind nicht in den FIG dargestellt. In jeder der Figuren ist jeweils auf der linken Seite die Situation dargestellt, zu welchen Zeitpunkten die Zugriffe von SPS und VM stattfinden würden. Auf der rechten Seite in jeder Figur ist dargestellt, auf welche Weise erfindungsgemäß der Zugriff von SPS und VM durch den Proxy koordiniert wird.

Im Fall von FIG 2 tritt zu einem Zeitpunkt t0 eine zugriffsanfrage durch die SPS 1 auf. Der entsprechende Zugriff 20 endet nach einer gewissen Zeit und anschließend erfolgt durch die VM ebenfalls eine Zugriffsanfrage, wobei der entsprechende Zugriff 21 ebenfalls eine bestimmte Zeit dauern würde. Wie in dem rechten Bild von FIG 2 dargestellt ist, kann der Zugriff auf den gemeinsamen Speicher 4 hier genauso erfolgen, wie die Anfragen erfolgt sind, da die Zykluszeit der SPS 1 eingehalten werden kann. Dies bedeutet, dass zum Zeitpunkt t0 ein tatsächlicher Zugriff 20' der SPS erfolgt und unmittelbar anschließend ein Zugriff 21' der VM. Die Summe der beiden Zugriffe 20' und 21' ist kleiner als die Gesamtzeit $\Delta$, in der ein SPS-Zugriff sicher erfolgen muss.

In FIG 3 ist der Fall dargestellt, dass die SPS wieder zum Zeitpunkt t0 eine Zugriffsanfrage 30 stellt. Die VM hat bereits früher eine Zugriffsanfrage 31 mit einer bestimmten zeitlichen Dauer gestellt. Würde der Zugriff der SPS erst nach Abschluss des Zugriffs der VM erfolgen, so würde die zulässige Gesamtzeit $\Delta$ überschritten werden. Daher koordiniert der Proxy 6 die beiden Zugriffe folgendermaßen: die VM ist im Hinblick auf den Speicherzugriff nachrangig. Ihr Speicherzugriff wurde gemäß dem rechten Bild von FIG 3 gestartet, da zum Zugriffsbeginn noch keine Anfrage der SPS vorlag. Wenn der Proxy nun die Zugriffsanfrage 30 der SPS zum Zeitpunkt t0 erfährt, erkennt er, dass der Zugriff 31' der VM unterbrochen werden muss, damit ein Zugriff 30' der SPS in der Zykluszeit (Gesamtzeit $\Delta$) erfolgen kann. Aus diesem Grund initiiert der Proxy 6 ein "Roll-Back" des bis zum Zeitpunkt t0 durchgeführten Zugriffsvorgangs 31' der VM. Die durch den Zugriff 31' durchgeführten Veränderungen im Speicher 4 werden mit dem "Roll-Back" 32' rückgängig gemacht. Da es sich um einen einfachen Wiederherstellungsalgorithmus handelt und x=1, dauert das "Roll-Back" 32' ebenso lang wie der bisherige Speicherzugriff 31' der VM. Unmittelbar anschließend an den "Roll-Back" 32' kann nun der tatsächliche Speicherzugriff 30' der SPS 1 erfolgen. Mit diesem Speicherzugriff 30' wird die Gesamtzeit $\Delta$ nicht überschritten. Anschließend an den Zugriff 31' der SPS 1 kann dann der Zugriff 31" der VM nun tatsächlich erfolgen. Dieser Zugriff 31" erfolgt in der notwendigen zeitlichen Länge. Dabei ist es unkritisch, wenn die Gesamtzeit $\Delta$ überschritten wird, denn bei der VM 2 bzw. dem darauf implementierten BuB 5 handelt es sich um ein nachrangiges System. Der Fall von FIG 3 entspricht der ersten Variante in der obigen Gleichung (1).

In dem Fall von FIG 4 erfolgt zunächst eine Zugriffsanfrage 41 durch die VM. Zum Zeitpunkt t0 erfolgt wieder die Zugriffsanfrage 40 der SPS. In diesem Fall stellt der Proxy fest, dass der Zugriff 41' durch die VM tatsächlich komplett ausgeführt werden kann und der Zugriff 40' der SPS unmittelbar anschließend erfolgen kann, ohne dass die Gesamtzeit $\Delta$ überschritten wird. Es ist hier kein "Roll-Back" notwendig. Die Zykluszeit der SPS wird auch so eingehalten.

Wie das oben gezeigte Beispiel darlegt, ist durch den Proxy 6 somit eine dynamische Zugriffszeitenregelung möglich, um den spezifischen Anforderungen des Zusammenspiels einer SPS mit einer oder mehreren virtuellen Maschinen zu begegnen.

**Patentansprüche**

1. Rechenvorrichtung (3),

   - in der eine speicherprogrammierbare Steuerung (1) implementiert ist, und
   - in der ein gegenüber der speicherprogrammierbaren Steuerung (1) im Hinblick auf einen Speicherzugriff nachrangiges System (2) implementiert ist, wobei
   - in die speicherprogrammierbare Steuerung (1) ein Speicher (4) integriert ist, auf den eine Komponente der speicherprogrammierbaren Steuerung (1) Zugriff hat und wobei
   - in der Rechenvorrichtung (3) eine Proxyeinrichtung (6) implementiert ist, die einen zugriff des nachrangigen Systems (2) auf den Speicher (4) der speicherprogrammierbaren Steuerung (1) derart koordiniert, dass ein gleichzeitiger Zugriff der Komponente der speicherprogrammierbaren Steuerung (1) Vorrang hat vordem Zugriff des nachrangigen Systems (2),

   **dadurch gekennzeichnet, dass**

   - die Proxyeinrichtung (6) gewährleistet, dass die speicherprogrammierbare Steuerung (1) innerhalb eines vorgegebenen Zeitraums Δ sicher einen Zugriff auf den Speicher (4) erhält.

2. Rechenvorrichtung nach Anspruch 1, wobei das nachrangige System (2) eine virtuelle Maschine beinhaltet.

3. Rechenvorrichtung nach Anspruch 2, wobei mit der virtuellen Maschine eine Bedien-und-Beobachtungs-Einheit (5) realisiert ist.

4. Rechenvorrichtung nach einem der vorhergehenden Ansprüche, wobei die Proxyeinrichtung (6) Teil der speicherprogrammierbaren Steuerung (1) ist.

5. Rechenvorrichtung nach einem der vorhergehenden Ansprüche, wobei die Proxyeinrichtung (6) gewährleistet, dass ein Zugriff des nachrangigen Systems (2) auf den Speicher (4) vollständig beendet wird, wenn eine Zugriffsanfrage der speicherprogrammierbaren Steuerung (1) vorliegt und ein vollständiger Zugriff der speicherprogrammierbaren Steuerung (1) noch innerhalb des vorgegebenen Zeitraums Δ ab der Zugriffsanfrage sichergestellt ist.

6. Rechenvorrichtung nach einem der vorhergehenden Ansprüche, wobei die Proxyeinrichtung (6) gewährleistet, dass ein Zugriff des nachrangigen Systems (2) rückgängig gemacht wird, wenn seine vollständige Beendigung dazu führen würde, dass bei Vorliegen einer Zugriffsanfrage durch die speicherprogrammierbare Steuerung (1) der Zugriff der speicherprogrammierbaren Steuerung nicht in dem vorgegebenen Zeitraum Δ durchgeführt werden kann.

7. Verfahren zum Betreiben einer Rechenvorrichtung nach einem der vorhergehenden Ansprüche, wobei ein Zugriff des nachrangigen Systems (2) auf den Speicher (4) der speicherprogrammierbaren Steuerung (1) derart koordiniert wird, dass ein gleichzeitiger Zugriff der Komponente der speicherprogrammierbaren Steuerung (1) Vorrang hat vor dem Zugriff des nachrangigen Systems (2),
   **dadurch gekennzeichnet dass**,
   die speicherprogrammierbare Steuerung (1) innerhalb eines vorgegebenen Zeitraums Δ sicher einen Zugriff auf den Speicher (4) erhält.

8. Verfahren nach Anspruch 7, wobei ein Zugriff des nachrangigen Systems (2) auf den Speicher (4) vollständig beendet wird, wenn eine Zugriffsanfrage der speicherprogrammierbaren Steuerung (1) vorliegt und ein vollständiger Zugriff der speicherprogrammierbaren Steuerung (1) noch innerhalb des vorgegeben Zeitraums Δ ab der Zugriffsanfrage sichergestellt ist.

9. Verfahren nach Anspruch 7 oder 8, wobei ein Zugriff des nachrangigen Systems (2) rückgängig gemacht wird, wenn seine vollständige Beendigung dazu führen würde, dass bei Vorliegen einer Zugriffanfrage durch die speicherprogrammierbare Steuerung (1) der Zugriff der speicherprogrammierbaren Steuerung (1) nicht in dem vorgegeben Zeitraum Δ durchgeführt werden kann.

**Claims**

1. Computation apparatus (3),

   - in which a programmable logic controller (1) is implemented, and
   - in which a system (2) that is subordinate to the programmable logic controller (1) in terms of a memory access is implemented, wherein
   - a memory (4) to which a component of the programmable logic controller (1) has access is integrated in the programmable logic controller (1) and wherein
   - a proxy device (6) which coordinates access to the memory (4) of the programmable logic controller (1) by the subordinate system (2) in such a manner that simultaneous access by the component of the programmable logic controller (1) has priority over access by the subordinate system (2) is implemented in the computation apparatus (3),

**characterised in that**

- the proxy device (6) ensures that the programmable logic controller (1) reliably receives access to the memory (4) within a predefined period Δ.

2. Computation apparatus according to claim 1, wherein the subordinate system (2) includes a virtual machine.

3. Computation apparatus according to claim 2, wherein a control and monitoring unit (5) is implemented by the virtual machine.

4. Computation apparatus according to any one of the preceding claims, wherein the proxy device (6) is part of the programmable logic controller (1).

5. Computation apparatus according to any one of the preceding claims, wherein the proxy device (6) ensures that access by the subordinate system (2) to the memory (4) is completely terminated if an access request from the programmable logic controller (1) exists, and complete access by the programmable logic controller (1) is still ensured within the predefined period Δ from the access request.

6. Computation apparatus according to one of the preceding claims, wherein, in the event an access request from the programmable logic controller (1) exists, the proxy device (6) ensures that access by the subordinate system (2) is revoked if its completion would mean it would not be possible for the programmable logic controller (1) to gain access within the predefined period Δ.

7. Method for operating a computation apparatus according to one of the preceding claims, wherein access by the subordinate system (2) to the memory (4) of the programmable logic controller (1) is coordinated in such a way that simultaneous access by the component of the programmable logic controller (1) has priority over access by the subordinate system (2),
**characterised in that**
the programmable logic controller (1) reliably receives access to the memory (4) within a predefined period Δ.

8. Method according to claim 7, wherein access by the subordinate system (2) to the memory (4) is completely terminated if an access request by the programmable logic controller (1) exists and complete access by the programmable logic controller (1) is still ensured within the predefined period Δ from the access request.

9. Method according to claim 7 or 8, wherein, in the event an access request from the programmable logic controller (1) exists, access by the subordinate system (2) is revoked if its completion would mean it would not be possible for the programmable logic controller (1) to gain access within the predefined period Δ.

**Revendications**

1. Dispositif informatique (3),

- dans lequel une commande à mémoire programmable (1) est mise en oeuvre, et
- dans lequel un système subordonné (2) par rapport à la commande à mémoire programmable (1) en ce qui concerne un accès à la mémoire est mis en oeuvre, dans lequel
- dans la commande à mémoire programmable (1) une mémoire (4) est intégrée, à laquelle une composante de la commande à mémoire programmable (1) a accès et dans lequel
- dans le dispositif informatique (3) un serveur proxy (6) est mis en oeuvre, qui coordonne un accès du système subordonné (2) à la mémoire (4) de la commande à mémoire programmable (1) de telle sorte qu'un accès simultané de la composante de la commande à mémoire programmable (1) prime sur un accès du système subordonné (2),

**caractérisé en ce que**

- le serveur proxy (6) garantit que la commande à mémoire programmable (1) reçoit bien un accès à la mémoire (4) au cours d'une période Δ prédéterminée.

2. Dispositif informatique selon la revendication 1, dans lequel le système subordonné (2) contient une machine virtuelle.

3. Dispositif informatique selon la revendication 2, dans lequel avec la machine virtuelle une unité de commande et d'observation (5) est réalisée.

4. Dispositif informatique selon l'une des revendications précédentes, dans lequel le serveur proxy (6) fait partie de la commande à mémoire programmable (1).

5. Dispositif informatique selon l'une des revendications précédentes, dans lequel le serveur proxy (6) garantit qu'un accès du système subordonné (2) à la mémoire (4) est entièrement coupé en cas de demande d'accès de la commande à mémoire programmable (1) et un accès total de la commande à mémoire programmable (1) reste garanti au cours de la période Δ prédéterminée à compter de la demande d'accès.

6. Dispositif informatique selon l'une des revendications précédentes, dans lequel le serveur proxy (6) garantit qu'un accès du système subordonné (2) est annulé si sa coupure totale conduirait à ce que, dans le cas d'une demande d'accès de la commande à mémoire programmable (1), l'accès de la commande à mémoire programmable ne puisse pas être réalisé pendant la période Δ prédéterminée.

7. Procédé d'exploitation d'un dispositif informatique selon l'une des revendications précédentes, dans lequel un accès du système subordonné (2) à la mémoire (4) de la commande à mémoire programmable (1) est coordonné de telle sorte qu'un accès simultané de la composante de la commande à mémoire programmable (1) prime sur l'accès du système subordonné (2),
   **caractérisé en ce que**
   la commande à mémoire programmable (1) reçoit bien un accès à la mémoire (4) au cours d'une période Δ prédéterminée.

8. Procédé selon la revendication 7, dans lequel un accès du système subordonné (2) à la mémoire (4) entièrement coupé en cas de demande d'accès de la commande à mémoire programmable (1) et un accès total de la commande à mémoire programmable (1) reste garanti au cours d'une période Δ prédéterminée à compter de la demande d'accès.

9. Procédé selon la revendication 7 ou 8, dans lequel un accès du système subordonné (2) est annulé si sa coupure totale conduirait à ce que, dans le cas d'une demande d'accès de la commande à mémoire programmable (1), l'accès de la commande à mémoire programmable (1) ne puisse pas être réalisé pendant la période Δ prédéterminée.

FIG 1

EP 2 572 249 B1

FIG 2

FIG 3

FIG 4

EP 2 572 249 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0363905 A2
- US 20050246453 A1
- US 20040098141 A1